Europäisches Patentamt

European Patent Office

Office européen des brevets

(11) Publication number: **0 441 157 A2**

# EUROPEAN PATENT APPLICATION

(21) Application number: **91100693.0**

(22) Date of filing: **21.01.91**

(51) Int. Cl.⁵: **G01L 23/22**

(30) Priority: **22.01.90 JP 13221/90**

(43) Date of publication of application:
**14.08.91 Bulletin 91/33**

(84) Designated Contracting States:
**DE FR GB**

(71) Applicant: **NIPPONDENSO CO., LTD.**
**1, 1-chome, Showa-cho**
**Kariya-shi Aichi-ken(JP)**

Applicant: **NIPPON SOKEN, INC.**
**14, Iwaya Shimohasumi-cho**
**Nishio-shi Aichi-Ken(JP)**

(72) Inventor: **Sato, Yasuyuki**
**6-2, Hijashinocho-2-chome**
**Kasugai-shi(JP)**
Inventor: **Nishida, Minoru**
**21-3, Wakamatsuhigashi-2-chome**
**Okazaki-shi(JP)**
Inventor: **Ohtsuka, Yoshinori**
**3-34, Eguchi-2-chome**
**Okazaki-shi(JP)**

(74) Representative: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**W-8000 München 2(DE)**

(54) Spark plug with pressure detector.

(57) A spark plug has a pressure detector which includes a diaphragm and semiconductor strain gauges. The diaphragm is provided in the vicinity of the combustion chamber within the housing and extending substantially in the axial direction of the housing to thereby form a reference chamber separated away from the combustion chamber and to thereby generate a strain due to a differential pressure between a pressure within the combustion chamber and a pressure within the reference chamber. The semiconductor strain gauges are formed in the diaphragm for changing its electrical signal in accordance with the strain of the diaphragm.

FIG. IA

FIG. IB

## SPARK PLUG WITH PRESSURE DETECTOR

BACKGROUND OF THE INVENTION

The present invention relates to a spark plug with a combustion pressure detector for detecting a combustion pressure of an internal combustion engine.

As a means for detecting a combustion pressure of an internal combustion engine, a pressure detector is well known in, for example, Japanese Patent Unexamined Publication Nos. 62-291534 and 62-293131.

In this case, a semiconductor strain gauge element is used and correction is effected by a circuit, which is therefore superior in accuracy, temperature characteristics and low impedance. However, the pressure detector is not of the built-in type in a plug. It is therefore necessary to form a hole for the pressure detector in addition of the hole for the plug in an engine. In a recent engine which has a high performance and which has no extra space, some burden is imposed on the engine design. Furthermore, although it is preferable to detect the pressures of all the cylinders in order to effect a high precision control by detecting the combustion pressure, it is very difficult to apply pressure detectors for the respective cylinder in view of the spatial problem.

For these reasons, as the conventional spark plug provided with the combustion pressure detecting means, there are two types one of which has a structure in which a piezo-electric element is embedded in a shoulder portion of the plug as shown in, for example, Japanese Utility Model Unexamined Publication No. 52-129837, and the other of which has a structure in which a pressure guide pipe is used to lead or transmit the pressure to an upper portion of the plug screw portion to detect the pressure with a diaphragm as shown in, for example, Japanese Utility Model Examined Publication No. 48-11581. However, in either case, a piezo-electric element is used as a detecting element. Accordingly, the piezo-electric element must be located at a position as far as possible away from the wall of the combustion chamber of the plug, i.e., at a possible deepest position of the pressure guide hole in case of, for example, the above described Japanese Utility Model Examined Publication No. 48-11581 in view of the heat resistance of the piezo-electric element. For this reason, a high frequency component of the pressure pulsation (resonance in the pressure guide pipe due to the combustion) would be erroneously regarded as an abnormal combustion such as knocking, which would lead to incorrect pressure detection.

Moreover, because of the temperature characteristics and the high impedance inherent in the piezo-electric element, the signal is likely to be affected by the radio wave noise when the signal is transmitted to the outside through the lead wire. As a matter of fact, it is very difficult to put the system into practical use.

SUMMARY OF THE INVENTION

In order to overcome the above-noted difficulties, an object of the invention is to provide a pressure detector built-in type spark plug having a combustion pressure detecting means which is capable of detecting the pressure with high precision.

According to a first aspect of the invention, there is provided a pressure detector built-in type spark plug which comprises: a housing mountable on a wall of a combustion chamber of an internal combustion engine and having first and second holes in an axial direction in communication with the combustion chamber and atmosphere; an insulator fixed to the first hole and an inner hole passing in the axial direction; a center electrode fixed on the combustion chamber side of the inner hole; a ground electrode confronting with or opposed to the center electrode to thereby define an electrical discharge portion; a sensing or detecting element fixed to the second hole, formed in the vicinity of an opening portion on the combustion chamber of the second hole, and having a penetrating hole for passing the combustion chamber and the second hole and a pressure detecting or sensing section formed in the vicinity of the opening portion on the combustion chamber side of the second hole for detecting a pressure within the combustion chamber through the penetrating hole; and a take-out or output lead wire electrically connected to the sensing element and extending through the atmospheric side of the second hole.

According to a second aspect of the invention, there is provided a pressure detector built-in type spark plug which comprises: a housing mountable on a wall of a combustion chamber of an internal combustion engine and having first and second holes in an axial direction in communication with the combustion chamber and atmosphere; an insulator fixed to the first hole and an inner hole passing in the axial direction; a center electrode fixed on the combustion chamber side of the inner hole; a ground electrode confronting with the center electrode to thereby define an electrical discharge portion; and a sensing or detecting element fixed to the second hole, and having a pressure detecting section for detecting a pressure within the combustion chamber through the penetrating hole, in which a cross section in the perpendicular to the axial direction at least from the combustion chamber end portion of the housing to the pressure detecting portion in the second hole is in the form of an oblong or elliptical shape.

According to a third aspect of the invention, there is provided a pressure detector built-in type spark plug which comprises: a housing mountable on a wall of a combustion chamber of an internal combustion engine and having first and second holes in an axial direction in communication with the combustion chamber and atmosphere; an insulator fixed to the first hole and an inner hole passing in the axial direction; a center electrode fixed on the combustion chamber side of the inner hole; a ground electrode confronting with the center electrode to thereby define an electrical discharge portion; a terminal provided on a side of atmosphere of the first hole and electrically connected to the center electrode; and a high voltage cable electrically connected to the terminal, in which sensing or detecting element is fixed to the second hole in the vicinity of the combustion chamber side of the second hole; a take-out or output lead wire is electrically connected to the pressure detecting section or part of the sensing element for clogging the second hole in the vicinity of the atmospheric side of the second hole and for taking out a signal to the atmospheric side; and a plug cap is provided to encase the high voltage cable of the spark plug and the output lead wire.

## BRIEF DESCRIPTION OF THE DRAWINGS

In the accompanying drawings:

Figs. 1A and 1B are a cross-sectional view and a front view showing a pressure detector built-in type spark plug according to a first embodiment of the invention;

Figs. 2A to 2C show the structure of the sensing or detecting element according to the first embodiment of the invention;

Fig. 3 is a circuit diagram showing a part of the sensing element shown in Figs. 2A to 2C;

Figs. 4 through 7 are sectional views showing the amount of stuck carbon within the pressure introduction port;

Figs. 8A and 8B are views showing the structure of the sensing or detecting element in accordance with a second embodiment;

Figs. 9A and 9B are views showing the structure of the lead wires in accordance with the second embodiment;

Figs. 10A and 10B are a sectional view and a front view of a pressure detector built-in type spark plug in accordance with a third embodiment;

Figs. 11A to 11C are views showing the structure of the sensing element according to the second embodiment;

Fig. 12 is a circuit diagram in accordance with the second embodiment;

Fig. 13 is a circuit diagram in accordance with the third embodiment;

Fig. 14 is a view showing the sensing or detecting element in accordance with a fifth embodiment;

Fig. 15 is a front view showing a pressure detector built-in type spark plug in accordance with a sixth embodiment;

Fig. 16 is a schematic view showing a shape of the communication hole of the housing in accordance with the sixth embodiment;

Fig. 17 is a schematic view showing a shape of the hole of the housing in accordance with the prior art;

Figs. 18 through 21 show a process of manufacture of the housing according to the sixth embodiment;

Fig. 22 is a sectional view showing a pressure detector built-in type spark plug mounted on the internal combustion engine in accordance with a seventh embodiment;

Fig. 23 is a cross-sectional view showing a plug cap in accordance with the seventh embodiment;

Figs. 24 to 26 show examples of the pressure detector built-in type spark plug according to the invention; and

Figs. 27 to 29 show examples of modification of the mounting method of the pressure detector built-in type spark plug.

## DESCRIPTION OF PREFERRED EMBODIMENTS

The present invention will now be described with reference to the accompanying drawings.

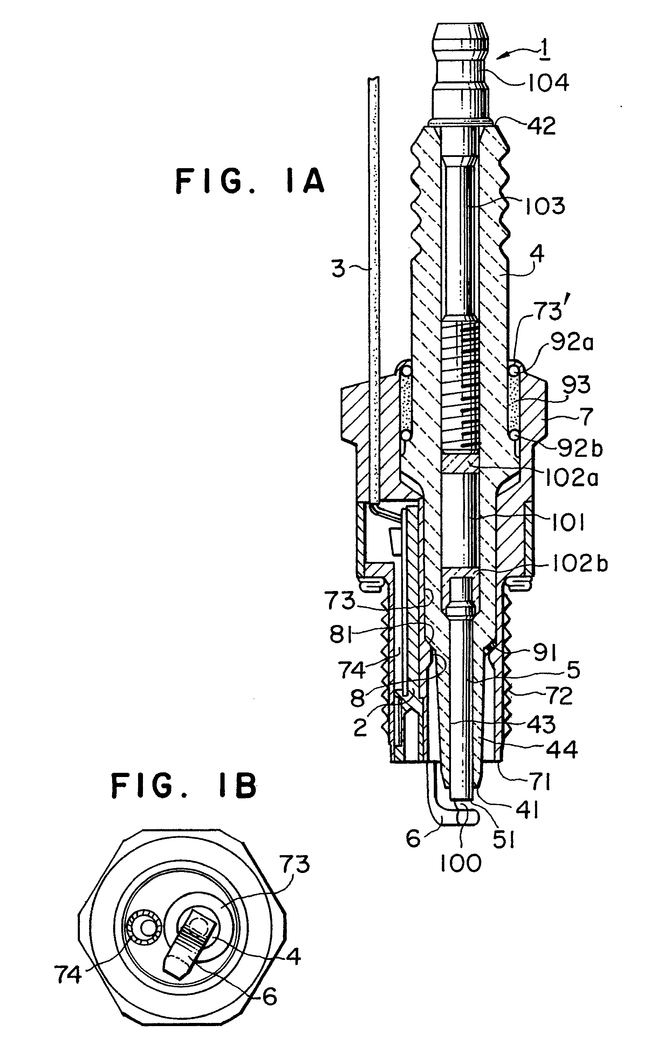

Figs. 1A and 1B show a spark plug with a pressure detector in accordance with a first embodiment of the invention.

The spark plug 1 with pressure detector in accordance with the first embodiment includes a sensing or detecting element 2, a lead wire 3, a center electrode 5 held by an insulator 4, and a ground electrode 6 opposed to an end face 51 of the center electrode 5 while forming a gap 100, i.e., an electric discharge portion, therebetween.

The insulator 4 has an axial inner hole 43 opened at the front end 41 and rear end 42. The center electrode 5 is inserted into the inner hole 43 of the insulator nose 44 of the insulator 4 to be disposed in a combustion chamber A of an internal combustion engine. The ground electrode 6 fixed to the end face 71, on the combustion chamber A side, of a housing 7 is confronted with the end face 51 of the center electrode 5 (forming the discharging portion 100).

The housing 7 is provided on its outer periphery with a mount screw 72 and has a first hole 73 and a second hole 74 which are in communication with the combustion chamber A and the atmospheric side, respectively. For, the purpose of sealing, the housing has, on one hand, a packing 91 at an atmospheric side surface 81 of a projection 8 and, on the other hand, rings 92a and 92b and powders 93 at an atmospheric end face 73' of the housing 7. It is possible to hold the insulator 4 by caulking or press-fitting the atmospheric side end face 73'.

On the other hand, the sensing element 2 is disposed in the second hole 74, and is welded to the end face 71 on the combustion chamber A side of the housing 7. The lead wire 3 is electrically connected to a central portion of the second hole 74 for transmitting a signal of the sensing element to the outside.

Further, reference numeral 101 denotes a resistor for protection against the radio wave noise, reference numerals 102a and 102b denote glass layers, numeral 103 denotes a center shaft, and numeral 104 denotes a terminal.

Fig. 1B is a front view of the pressure detector provided spark plug 1 shown in Fig. 1A, as viewed from below (from the ground electrode 6).

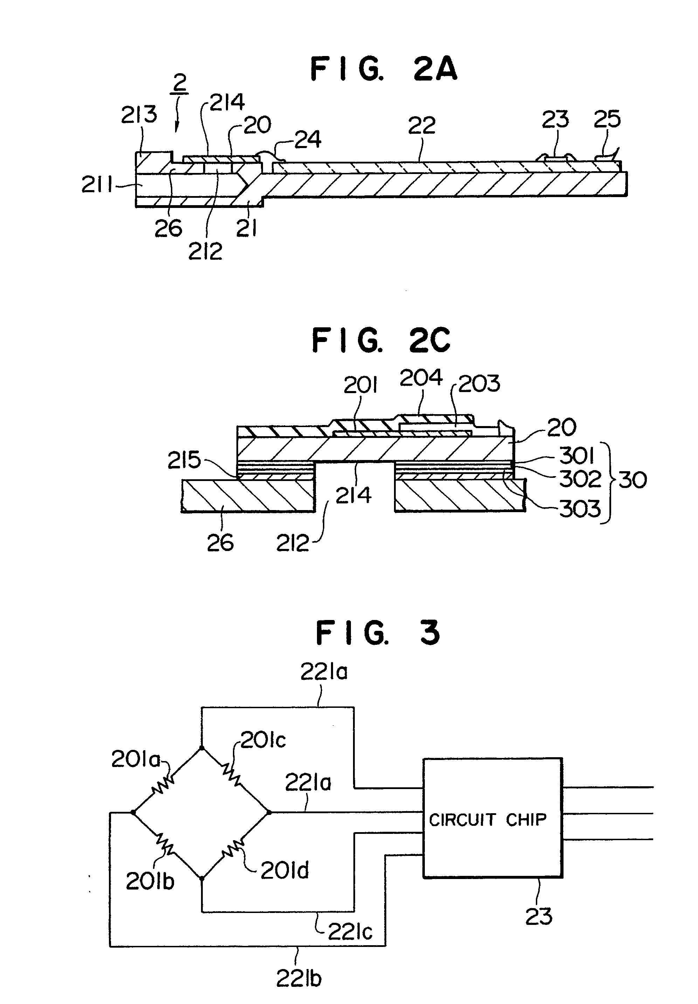

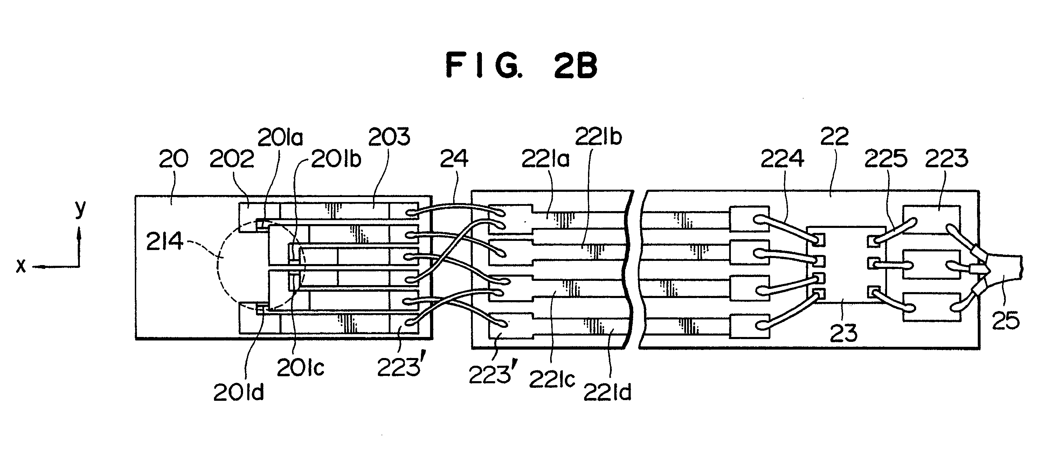

Figs. 2A and 2B detail the sensing element 2. Fig. 2A is a sectional view showing the sensing element 2, in which a sensing chip 20 for detecting a pressure is a semiconductor strain gauge which is the pressure detecting means. An element holder 21 is made of alloy such as Fe-Ni-Co alloy having a low thermal expansion coefficient, which is subjected to a Ni plating. The element holder 21 has a pressure introduction port 211 which forms a part of a penetrating hole, a holder portion 26 and a penetrating hole 212 formed in the holder portion 26. An end portion 213 is welded to the combustion chamber end face 71 of the housing 7. The sensing chip 20 is bonded (for example, by blazing) at a bonding portion 215 so as to cover the penetrating hole 212. A diaphragm portion 214 of the sensing chip 20 is formed so as to cover the penetrating hole 212 on the holder portion 26. A lead board 22 is made of ceramic or the like and has circuiting conductors on its surface. The lead board or circuit board 22 is intimately fixed to the element holder 21. A circuit chip 23 is intimately fixed to the lead board 22 for temperature compensation and amplification of a signal of the sensing element. Reference numeral 24 denotes a wire and numeral 25 denotes a lead wire for transmitting a signal to the outside.

Fig. 2B is a front view showing the sensing element 2. Fig. 2C is a sectional view showing a sensing or detecting chip 20. The sensing or detecting element 2 is provided with semiconductor strain gauge elements 201a to 201d each made of single crystalline thin film formed by vapor deposition of silicon on the sensing chip 20. The direction or orientation of a principal plane of the thin film forming the semiconductor strain gauges 201a to 201d is (110). The longitudinal direction of the semiconductor strain gauge elements 201a to 201d is the <100> direction. The semiconductor strain gauge elements 201a to 201d are located immediately above four positions on the circumferential portion of the diaphragm 214 as shown in Fig. 2B. Further, the semiconductor strain gauge elements 201a to 201d are electrically connected to six silicon leads 202 formed on the sensing chip 20 and are conductively connected through the silicon leads 202 to lead electrodes 203 made of heat-resistive metal thin films. These connections except for part (pad portions) of the lead electrodes 203 are protected by insulative coating 204 made of SiN or $SiO_2$. A metallic thin film 30 is formed on the rear side of the sensing chip 20 except for the diaphragm portion 214 corresponding to the penetrating hole 212. In this case. The metallic thin film 30 is formed of three layers of Ti thin film 301, Mo thin film 302 and Ni thin film 303 and is fixed to the element holder 21 by blazing at 215.

Four wirings such as wires 221a, 221b, 221c and 221d are formed on the lead board 22 by a thick film printing using silver palladium alloy or the like and are connected through wires 24 to the lead electrodes 203.

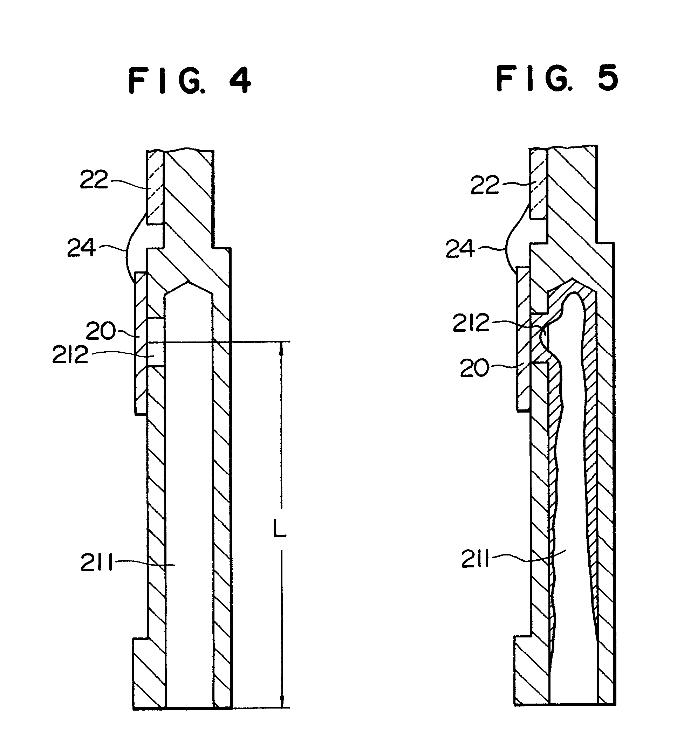

Fig. 3 shows the electric connection between the gauges 201a to 201d and the leads 221a to 221d. As is apparent from Fig. 3, the electric connection forms a Wheatstone bridge of the semiconductor strain gauge elements 201a to 201d.

This circuitry is connected to the circuit chip 23 through wires 224 as shown in Fig. 2B. Further, the input/output of the circuit chip 23 are connected to lead wires 25 through wires 225 and wiring pads 223 to transmit the signals to the outside.

With the above-described structure of the pressure detector incorporated in the spark plug according to the first embodiment, it is possible to detect the pressure in the combustion chamber by the sensing element 2 and the lead wire 3 in addition to the function for spark discharge for the internal combustion engine.

In particular, in the first embodiment, since the substrate of the sensing chip 20 is made of sapphire, it is superior in heat resistance. Also, the blazed surface between the sensing chip 20 and the element holder 21 functions as a heat conduction layer with a high heat transfer ability. Accordingly, when the diaphragm 214 is exposed to high temperature flame, the heat conducts rapidly to the element holder 21. Also, the heat of the element holder 21 is rapidly dissipated to the housing 7 due to the heat conduction from the welded portion of the combustion chamber side end face 71 of the housing and the heat transfer within the second hole 74. For this reason, the reliability of the sensing element 20 is high, and it is possible to avoid the malfunction of the circuit formed in the circuit chip 23 due to the high temperature. In addition, it is possible to avoid the deterioration in reliability of wire bondings at the pad portions 223' of the lead electrode 203 and the wires 221a to 221d upon the temperature rise in the wire bondings.

Incidentally, the semiconductor strain gauges and the silicon leads per se may stand the high temperature.

Moreover, since the sapphire substrate which is superior in heat resistance is used as the sensing chip 20 having the diaphragm 214, and the semiconductor strain gauge elements 201 made of single crystalline silicon are formed on the sapphire substrate, even if the sensors are used at a high temperature (above 150°C), there is no problem that a leak current is increased at the PN junction and it would be impossible to detect the pressure at the high temperature as in a diffused resistor gauge formed by diffusion of impurities in the silicon substrate. Thus, it is possible to detect the pressure at the high temperature.

Since the welding between the element holder 21 and the housing end face 71 and the blazing between the element holder 21 and the sensing chip 20 are firm, it is possible to sufficiently detect the pressure in the high temperature and high pressure condition.

It is also possible to fix a plurality of lead base plates to the element holder and to connect these members through a heat resistive leads. By using the plurality of base plates, it is possible to reduce the thermal stress applied to the element holder.

The detecting position, i.e., the semiconductor strain gauge elements 201a to 201d is positioned, away from the end face 71 exposed to the combustion chamber, i.e. deep in the housing along the axis of the plug 1. The position of the wires 24 and the position of the circuit chip 23 in the housing are further remote away from the end face 71. Therefore, although the center electrodes 5 and the ground electrode 6 of the plug 1 are exposed in the high temperature condition, the temperatures of the semiconductor strain gauge elements 201a to 201d, the wire connection portions of the lead electrodes 203 and the circuit chip 23 are lowered in this order to thereby prevent the damage due to the heat.

As described above, in the first embodiment, the distance L from the end face 71 on the combustion chamber side of the housing 7 to the penetrating hole 212, i.e., the pressure detecting section or part may be considerably shortened in comparison with the conventional arrangement. It is possible to suppress the resonance due to the long distance L.

However, since the second hole 74 is formed in the wall of the housing of the plug and the sensing element 2 is inserted therein, the higher (in Figs. 1A and 2A) the positions of the pressure introduction port 211 and the penetrating hole 212 become, the longer the distance from the combustion chamber increases. As a result, the temperature of the extended end portion of the penetrating hole 212 is lowered. Also, in general, the amount of carbon produced by the combustion of gasoline is large in the cold atmosphere or when the temperature of the engine is low. In this case, a part of the carbon sticks to the wall surfaces of the plug and the combustion chamber. For this reason, the carbon clogs the pressure introduction port 211 and the penetrating hole 212 so that the fluid pressure within the combustion chamber would not easily be transferred to the diaphragm 214. As a result, it would be impossible to detect the pressure with high precision. The optimum distance L will be discussed in view of the foregoing difficulty.

Fig. 4 shows an example in which the distance or depth L from the end face, at a side exposed to the combustion chamber, of the pressure introduction port 211 to the penetrating hole 212 is large. In this case, in the cold atmosphere or the low temperature of the engine, the carbon produced by the combustion is accumulated in the pressure introduction port 211 and the penetrating hole 212. The amount of carbon is larger as the temperature is lower. Also, even if the temperature of the engine is elevated, since the depth is large, the temperature is not largely elevated so that the carbon would not easily be burnt. As shown in Fig. 5, due to the repetitive use, the carbon amount is decreased only in the vicinity of the inlet of the pressure introduction port 211, and the carbon would clog the pressure introduction port 211 and the penetrating hole 212 toward the deeper portion. As a result, it becomes difficult that the pressure within the combustion chamber is transmitted rapidly to the diaphragm 214, resulting in failure of the exact pressure detection.

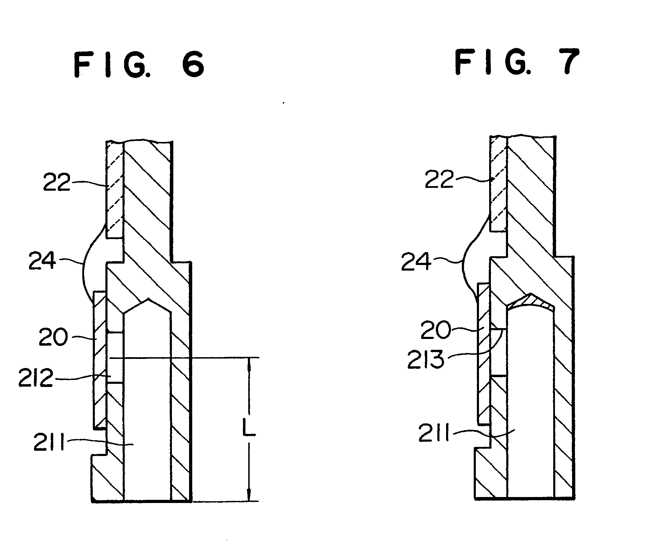

Fig. 6 shows an example in which the distance or depth L from the end face of the pressure introduction port 211 to the penerating hole 212 is small as in the present invention. In this case, in the cold atmosphere and when the temperature of the engine is low, the carbon produced by the gasoline combustion is accumulated in the pressure introduction port 211 and the penetrating hole 212. Accordingly, when the temperature of the engine is elevated, as shown in Fig. 7, the temperature is increased and the carbon is almost burnt, thereby making the amount of accumulation small. It is thus possible to detect the pressure with high precision without clogging the pressure introduction port 211 and the penetrating hole 212.

As a result of the present inventors' serious studies, it has been found that there is no defect due to the accumulation of carbon irrespective of the inner diameter of the pressure introduction port 211 in the range of 1 to 5 mm by providing the pressure detecting section less than 10 mm in length with respect to the depth L from the end face 71 to the penetrating hole 212.

Furthermore, it has been found that there is no resonance in the case where the inner diameter of the pressure introduction port 211 is in the range of 1 to 5 mm and the distance L is less than 10 mm.

A second embodiment of the invention will be described, which relates especially to a lead takeout portion and has the same structure as that of the first embodiment except for the lead takeout structure.

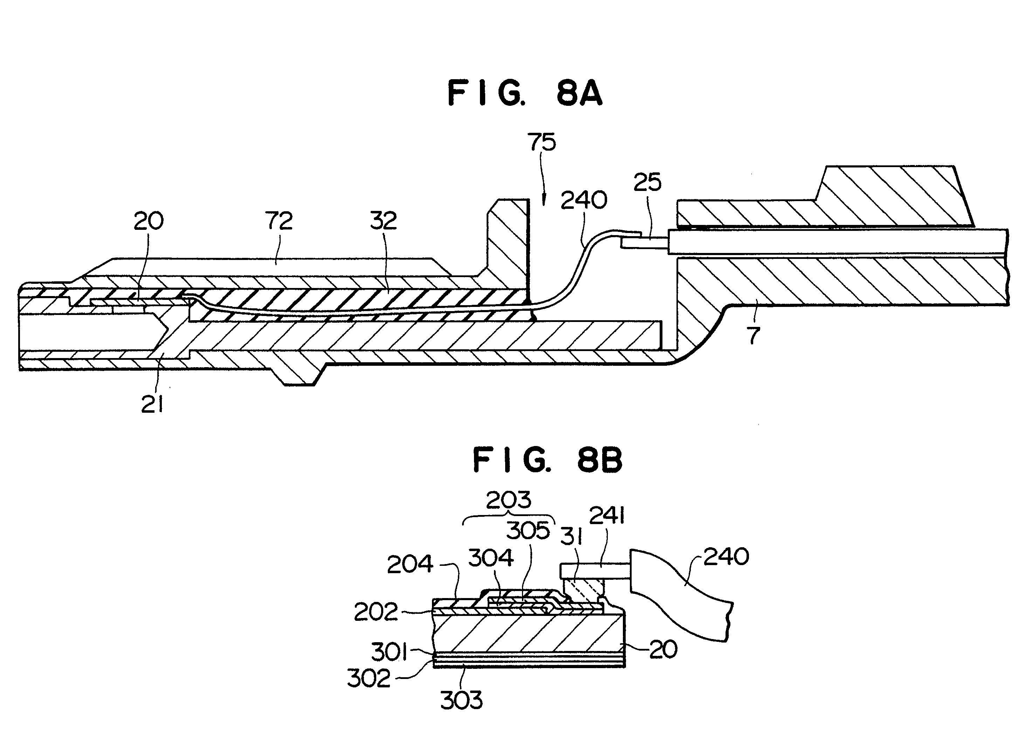

Fig. 8A is a sectional view showing the takeout portion of the lead for the sensing or detecting chip 20. In the second embodiment, a signal from the sensing chip 20 is transmitted through heat resistive lead 240 to the lead wires 25. The heat resistive leads 240 are fixed in a gap 75 formed between the housing 7 and the element holder 21 by a sealing material 32 such as potting resin which has a low hardness (soft material).

Fig. 8B is a cross-sectional view showing a mounted state of the sensing chip 20 and the heat resistive leads 240. A lead electrode 203 formed of two layers, i.e., a Ti thin film 304 and a Pt thin film 305 are formed on the silicon lead 202, and a bump 31 of solder is formed thereon. A lead portion of the heat resistive lead 24 is brought into contact with the bump 31 by applying heat (for example, laser beam) to the bump 31 to thereby soften or melt the bump to connect the lead 241 to the lead electrode 203.

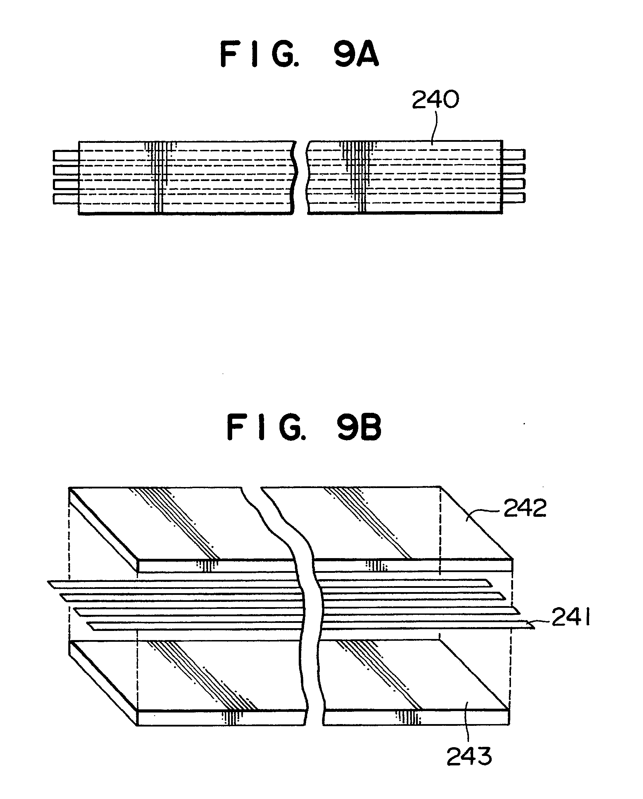

Figs. 9A and 9B show a structure of the heat resistive lead 240. Numeral 241 denotes metallic lead elements each made of, for example, copper in the form of an elongated plate. Reference numerals 242 and 243 denote covers made of resin such as polyimide. The metallic leads 241 are clamped by the upper and lower covers 242 and 243 and is heated to form a one-piece structure.

The assembling method of the heat resistive lead to the sensing chip 20 will be explained. The projected portions of the metallic leads 241 at both ends are heat-bonded to the bump 31 of the sensing chip 20. Under this condition, the sensing element 2 is inserted into the opening portion of the housing 7 and is bonded thereto by welding. Thereafter, the other end of the heat resistive lead 240 is fixed to the lead wires 25 by pressing while heating or the like. Then, the hole 75 of the housing 7 is sealed by filling thereinto the sealing material 32 made of, for example, potting resin.

According to the second embodiment, it is possible to dispense with the lead bound 22 shown in the first embodiment. It is thus possible to considerably simplify the structure.

In addition, by filling the second hole 74 with the sealing material 32, the wire lead 240 is fixed in place. This structure causes the heat received from the housing to dissipate to the outside.

In the first embodiment, the circuit chip 23 for amplification and temperature compensation is formed in the end face on the atmospheric side of the sensing element 2. In a third embodiment, an adjustment means is formed on this circuit chip 23.

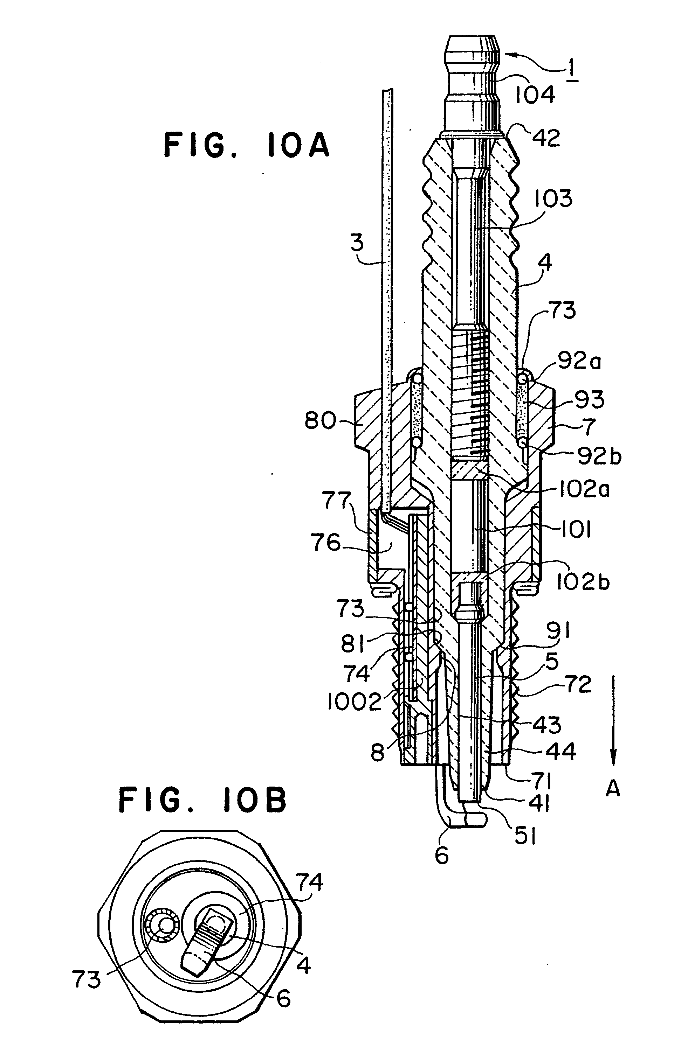

Figs. 10A and 10B show a pressure detector built-in type spark plug according to the third embodiment, in which the same reference numerals are used to denote the same parts as those in the first embodiment.

In the third embodiment, the spark plug has an opening portion 76 for adjusting a resistance for output adjustment of the semiconductor strain gauge output on the sensing element 2 (as later described by means of a laser trimming or the like) below a hexagonal portion 80 of the housing 7. After the adjustment, a sealing ring 77 is inserted and both ends of the sealing ring 77 are sealed by adhesives or welding.

A sensing or detecting element 1002 capable of adjusting the output is provided in the pressure detector built-in type spark plug of the third embodiment.

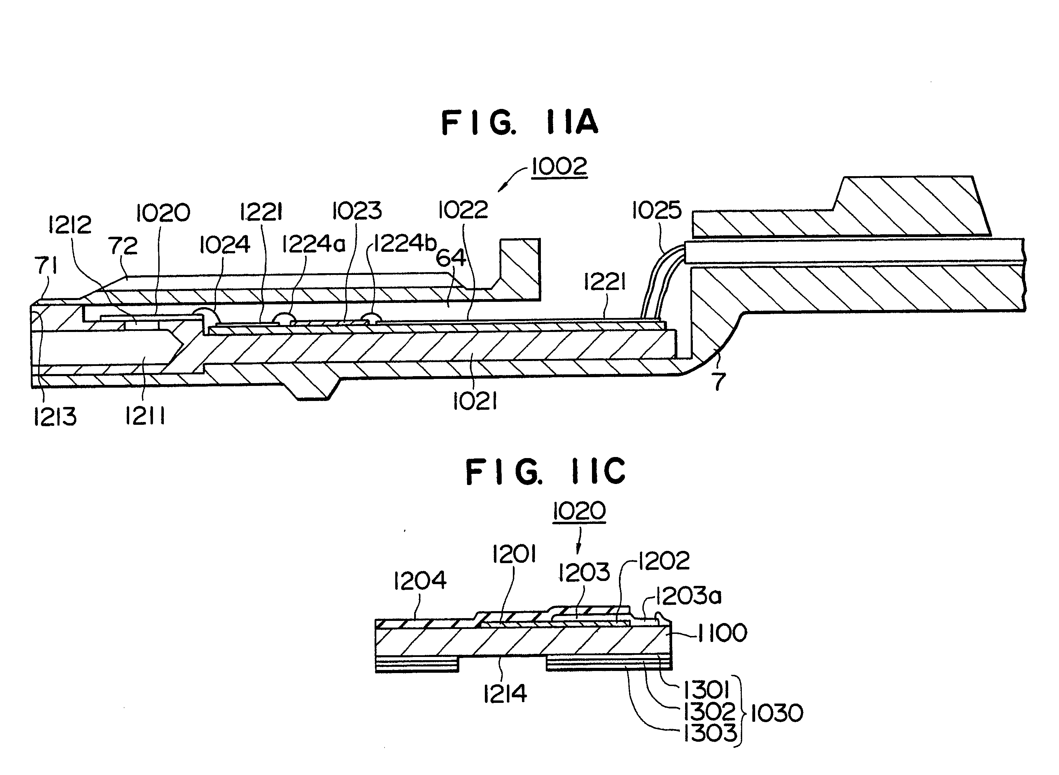

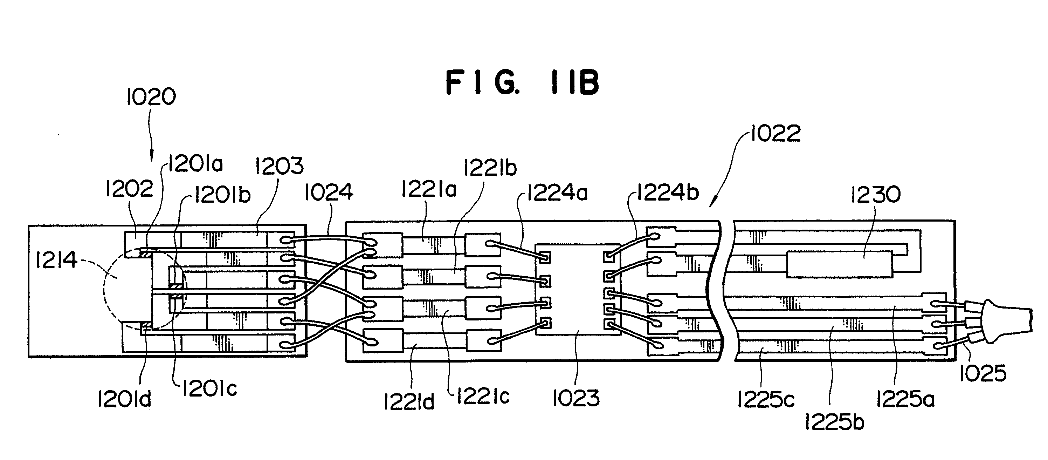

Fig. 11A is a cross-sectional view showing the sensing element 1002 used in the third embodiment.

In Fig. 11A, numeral 1020 denotes a sensing or detecting chip for detecting the pressure through a semiconductor strain gauge, and numeral 1021 denotes an element holder made of Fe-Ni-Co alloy having a low thermal expansion coefficient, and having Ni-plated surface. The element holder 1021 has a pressure introduction port 1211 and a penetrating hole 1212. A holder end portion 1213 is welded to the combustion chamber end face 71 of the housing 7. The sensing chip 1020 is bonded (by blazing for example) so as to shield the penetrating hole 1212. Numeral 1022 denotes a lead board or circuit board on which metal wirings are applied and which is made of ceramic. The board 1022 is intimately fixed to the element holder 1021. Numeral 1023 denotes a circuit chip for compensating the temperature dependence of or amplifying the signal of the sensing element. The chip 1023 is intimately fixed to the lead board 1022. Numeral 1221 denotes metal wirings on the lead board, which serve to electrically connect the sensing chip 1020 with the circuit chip 1023 through bonding wires 1024, 1224a and 1224b.

The sensing element 1020 is inserted into the second hole 74 of the housing 7. The end face 71 at a side of the combustion chamber and an end portion 1213 of the element holder 1021 of the sensing element 1020 are fixed to each other by welding or the like.

Fig. 11B is a front view showing the sensing chip 1020 and the lead board 1022. Fig. 11C is a cross-sectional view showing the sensing chip 1020. In the sensing chip 1020, semiconductor strain gauges 1201a, 1201b, 1201c and 1201d made of single crystalline thin films produced by vapor deposition of silicon are formed on a surface of a substrate 1100 made of sapphire. The orientation or direction of a principal plane of the single crystalline thin film is (100) and the longitudinal direction of the semiconductor strain gauges is <110> direction.

As shown in Fig. 11B, the semiconductor strain gauges 1201a to 1201d are arranged at four positions in the circumferential portion of the diaphragm 1214 and are connected to silicon leads 1202 made of silicon deposited on the sapphire substrate 1100. Furthermore, the strain gauges are connected through the silicon leads 1202 to the heat resistive lead electrodes 1203 thereon. The circuitry portion as a whole is protected by insulator coating layer 1204 of SiN or $SiO_2$ except for the pad portions 1203a.

A metallic thin film 1030 is formed on the rear surface of the sapphire substrate 1100 except for the diaphragm portion 1214 corresponding to the penetrating hole 1212. In the third embodiment, the thin film 1030 is composed of three layers of a Ti thin film 1301, a Mo thin film 1302 and a Ni thin film 1303 and is fixed to the element holder 1021 by blazing.

Wirings 1221a, 1221b, 1221c and 1221d are formed on the lead substrate 1022 by thick film printing technique and are connected to the metallic thin film 1203 through bonding wires 1024 to form the semiconductor strain gauges 1201a to 1201d into a Weatstone bridge structure. The four wirings 1221a to 1221d are connected to the circuit chip 1023 through the bonding wires 1224a. Further, the input and output of the circuit chip 1023 is connected to the thick film wirings 1225a, 1225b and 1225c on the lead board 1022.

Reference numeral 1230 denotes a thick film adjustment resistor printed and heated on the lead substrate 1022, which resistor serves as a trimming resistor of the detecting circuit to be described later.

Numeral 1025 denotes a lead wire composed of an electric power supply line, a ground line and a signal line.

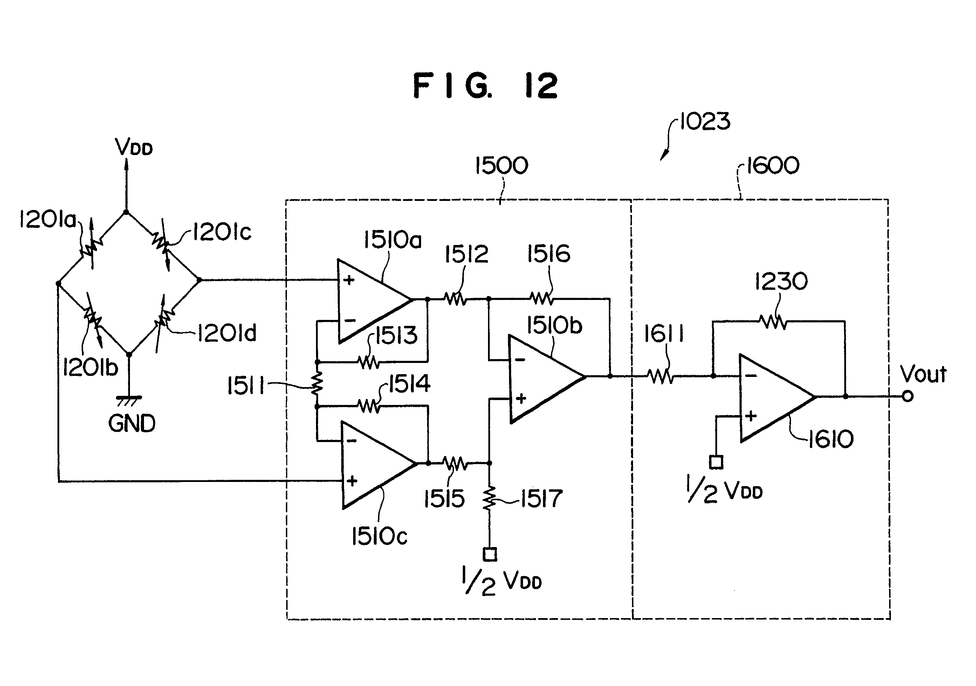

Fig. 12 shows one example of the detecting circuit. A circuit on the circuit chip 1023 is composed of an amplifying circuit 1500 in a first stage and an amplifying circuit 1600 in a subsequent stage. Th first stage amplifying circuit 1500 is composed three operational amplifiers 1510a, 1510b and 1510c, and seven resistors 1511, to 1517. The subsequent stage amplifying circuit 1600 is composed of an operational amplifier 1610 and two resistors 1611 and 1230. In the first and subsequent stage amplifying circuits, all the operational amplifiers and resistors except for the output adjustment resistor 1230 are formed by the IC production process on the circuit chip 1023. The resistor 1230 is formed by the thick film printing and heating on the substrate 1022 shown in Fig. 11A.

In the third embodiment, in the case where resistance of the resistor 1511 is 5 KΩ, the resistance of each of the resistors 1512, 1513, 1514 and 1515 is 10 KΩ, and the resistance of each of resistors 1611 and 1230 is 20 KΩ, the amplification factor of the first stage is 50 and the amplification factor of the subsequent stage is 1.

In general, the semiconductor strain gauges are formed by diffusion of impurities. Since the bridge output is not kept constant due to the change in diffusion condition and impurity amount or the change in formation condition of the diaphragm, it is necessary to adjust the output after the pressure detector or sensor is mounted in the spark plug. However, this adjustment is very difficult because the detector is mounted in the spark plug. Accordingly, in the third embodiment, since the output adjustment resistor 1230 shown in Fig. 11B. is exposed in the opening portion 76 of the housing 7, it is very easy to adjust or trim the output to be a desired value by a laser trimming.

In a fourth embodiment, there is shown a circuit for easy temperature compensation of the pressure detector.

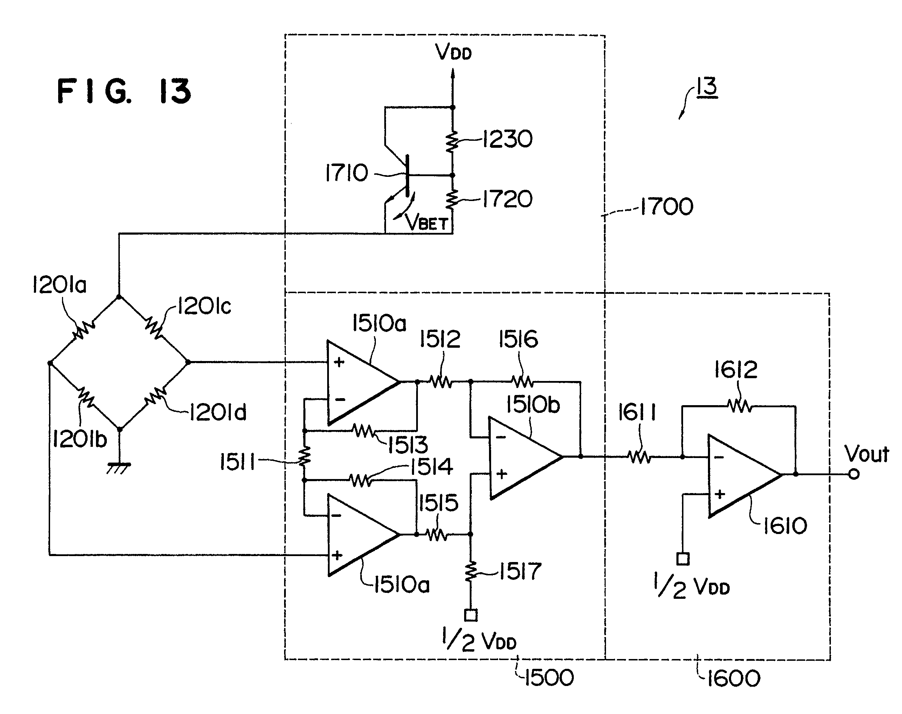

Fig. 13 shows the fourth embodiment in which the same reference numerals are used to denote the like members shown in Fig. 12.

Numerals 1500 and 1600 denote the first and subsequent stage amplifying circuits. In the fourth embodiment, a resistor 1612 of the subsequent stage amplifying circuit 1600 is a fixed resistor formed on the circuit chip 1023. Numeral 1700 denotes a temperature compensation or correction circuit which is composed of a transistor 1710 formed on the circuit chip 1023 and the resistor 1230 formed on the lead substrate 1203 shown in Fig. 11B.

Since the temperature compensation adjustment resistor 1230 is exposed in the opening portion 76 of the housing 7 as in the third embodiment, it is possible to adjust the resistance of the resistor 1230 to a desired value by the laser trimming of the resistor 1230.

In general, in the conventional manner, since the pressure sensitivity of the semiconductor strain gauges is decreased in accordance with the rise in the temperature, in the case where the gauges are used at a high temperature for the detection of the combustion pressure, it is necessary to compensate for the temperature. In the fourth embodiment, the temperature compensation is attained by changing the voltage applied to the bridge circuit according to the temperature in a constant voltage operation. Namely, since the voltage $V_{BE}$ between the base and emitter of the transistor 1710 is decreased in accordance with the rise in the temperature, the voltage applied to the bridge circuit is increased in accordance with the rise in the temperature. For this reason, it is possible to compensate for the reduction in pressure sensitivity due to the temperature rise. The correction or compensation amount depends upon a ratio of the resistance of the resistor 1720 to the resistance of the temperature correction or compensation adjustment resistor 1230. It is therefore possible to readily determined the desired value by trimming the resistor 1230.

In the third and fourth embodiments, the detecting circuit is formed on the circuit chip 1023 and the adjustment resistor is formed on the lead board 1022 by the thick film printing technique. However, it is possible to form a thin film resistor of Si/Cr or the like as the adjustment resistor on the circuit chip 1023.

In the third and fourth embodiment, the adjustment is performed by the laser trimming after the sensing element 1020 has been mounted in the spark plug 1. It is, however, possible, to adjust the sensing element prior to mounting it in the plug.

In the method described above, since the adjustment resistor is adjusted before the sensing element 1020 is actually mounted in the plug, and the sensing element is actually mounted in the second hole 74 of the housing 7 of the spark plug, it is possible to dispensed with the opening portion 76 and the sealing ring 77.

The foregoing description relates to the output adjustment and temperature compensation adjustment but may be applied to adjustment of an inequilibrium of the bridge.

It is possible to apply the invention to at least two of the output adjustment, temperature compensation and inequilibrium adjustment in combination.

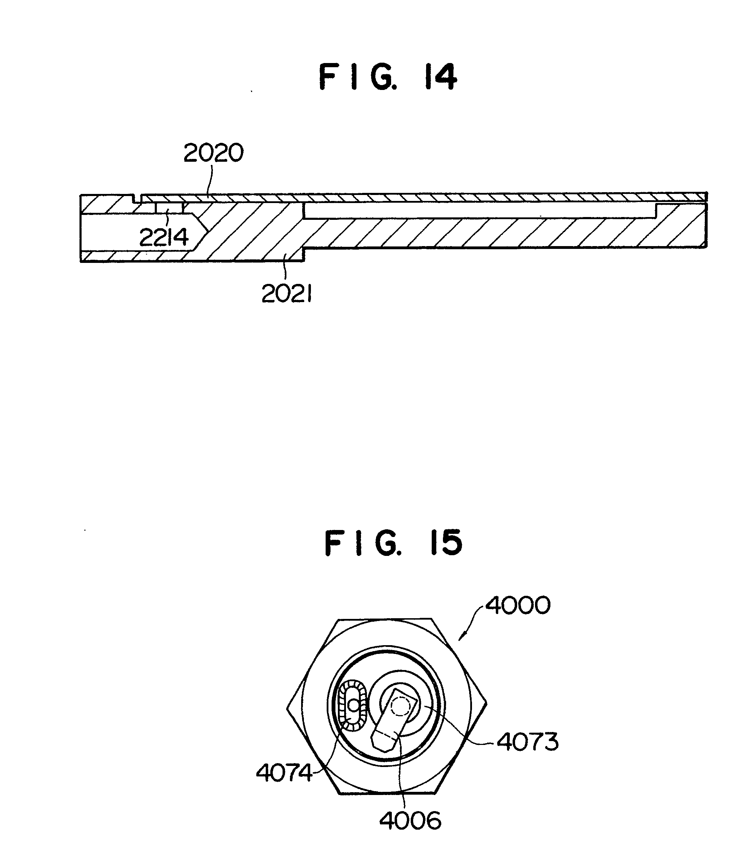

Fig. 14 is a cross sectional view showing the sensing or detecting chip 2020 and the sensing holder 2021 according to a fifth embodiment. In this embodiment, the lead board is dispensed with, and the sensing chip 2020 is elongated to make the sensing chip 2020 serve also as the take-out portion.

The sensing chip 2020 is fixed to the element holder 2021 by blazing only at one end of the diaphragm 2214. The other end for taking out the lead is not fixed.

With such an arrangement, it is possible not only to simplify the structure to dispense with the take-out portion but also to suppress the adverse effect of the thermal stress of the element holder 2021 against the sensing chip 2020 since the element holder 2021 and the sensing chip 2020 are fixed to each other at the single point.

A sixth embodiment relates to a shape of the second hole 74 in the housing 7 for communicating the combustion chamber with the atmosphere.

Fig. 15 is a front view of the pressure sensor built-in type spark plug 4000 as viewed from the outer electrode 4006.

In this embodiment, the cross-sectional shape of the hole 4074 is different from that of the first embodiment but the other structure thereof is the same as that of the first embodiment.

As is apparent from Fig. 15, in the sixth embodiment, the hole 4074 is in the form of an oblong shape or an elliptical shape and the element holder 21 is inserted into the hole 4074, whereby an insulator and a pressure detector or sensor are arranged in an spark plug having a limited dimensions and the reliability of the insulator is ensured with a high detection precision of the pressure detector.

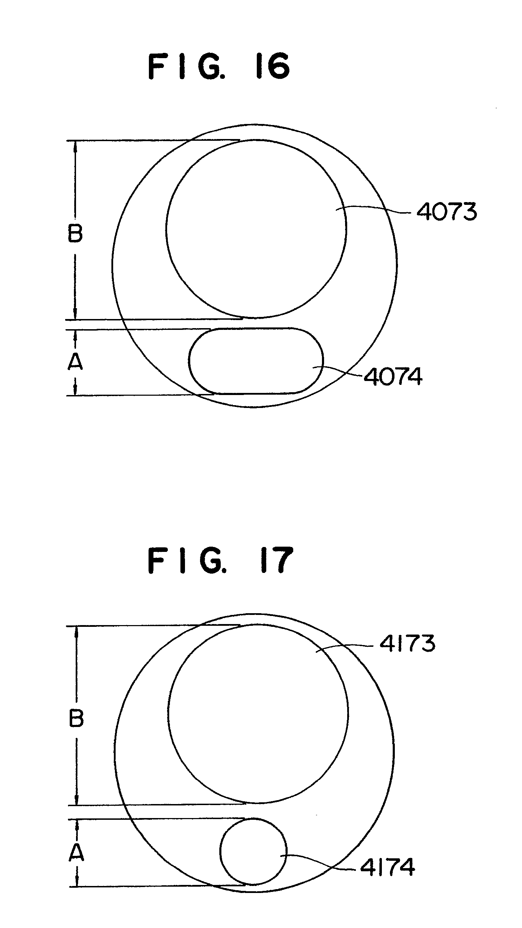

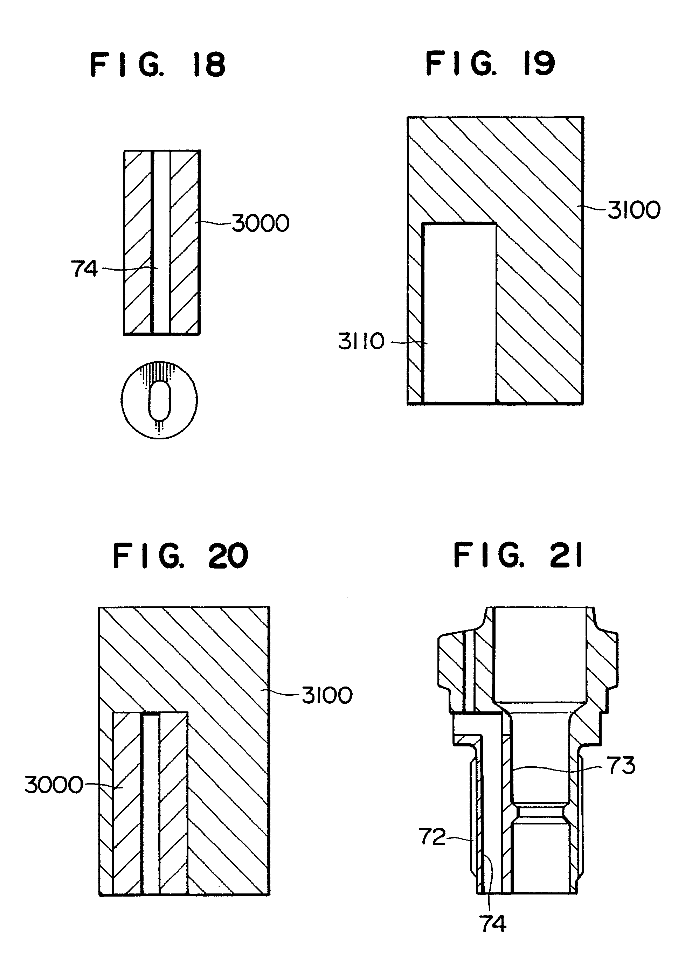

Fig. 16 shows a shape of the housing end face according to the sixth embodiment and Fig. 17 shows the hole according to the first embodiment. The distance between the center of the first hole 4073 and the center of the second hole 4074 in the sixth embodiment is the same as the distance between the center of the first hole 4173 and the center of the second hole 4174 in the first embodiment. However, as is apparent from Figs. 16 and 17, the space for arranging the sensing chip in the sixth embodiment is much larger than that in the first embodiment by the provision of the oblong or elliptical second hole in the sixth embodiment.

Accordingly, in the pressure detector built-in type spark plug, there is no dimensional extra space in the direction passing through the center of the first hole for holding the insulator and the center of the second hole for the arrangement of the pressure detector or sensor is small. However, as shown in Fig. 16, the second hole in which the pressure detector is disposed is in the form of an oblong or elliptical shape, whereby the space which has not been utilized may be used as a space for the detector. Thus, it is possible to enlarge the size of the pressure detector. It is also possible to facilitate the manufacture. Even if the pressure detector or sensor is enlarged, it is possible to provide a small size spark plug with the pressure detector built therein as a whole.

In the sixth embodiment, it is possible to make the whole shape of the second hole 4074 in the axial direction oblong or elliptical where the sensing or detecting element 2 is disposed. It is also possible to extend the second hole from the end portion 71 of the housing 7 to the portion needed for a large space of the sensing element 2, and to extend into the deeper portion in a round hole which is the same as that of the first hole 73 of the first embodiment.

A method for producing a hole in the housing 7 into which the oblong or elliptical pressure detector or sensor is disposed will be described. As a method for forming the hole in this embodiment, a metal powder molding article having an oblong or elliptical hole is formed and sintered at a high temperature.

It is also possible to form the hole in accordance with the following method:

Figs. 18 through 21 show the manufacturing method thereof.

First of all, as shown in Fig. 18, a pipe 3000 having an oblong or elliptical hole 74 in which the pressure detector or sensor is disposed is cut to have a predetermined length.

As shown in Fig. 19, a round rod 3100 is cut to have a predetermined length, and a hole 3110 is formed in the round rod 3100, so that the pipe 3000 having the oblong or elliptical shape as shown in Fig. 18 can be inserted thereinto.

Subsequently, as shown in Fig. 20, the pipe 3000 having the oblong or elliptical hole 74 is inserted into the hole 3110 in the round rod 3100 and fixed thereto by blazing, press-fitting and shrink fit.

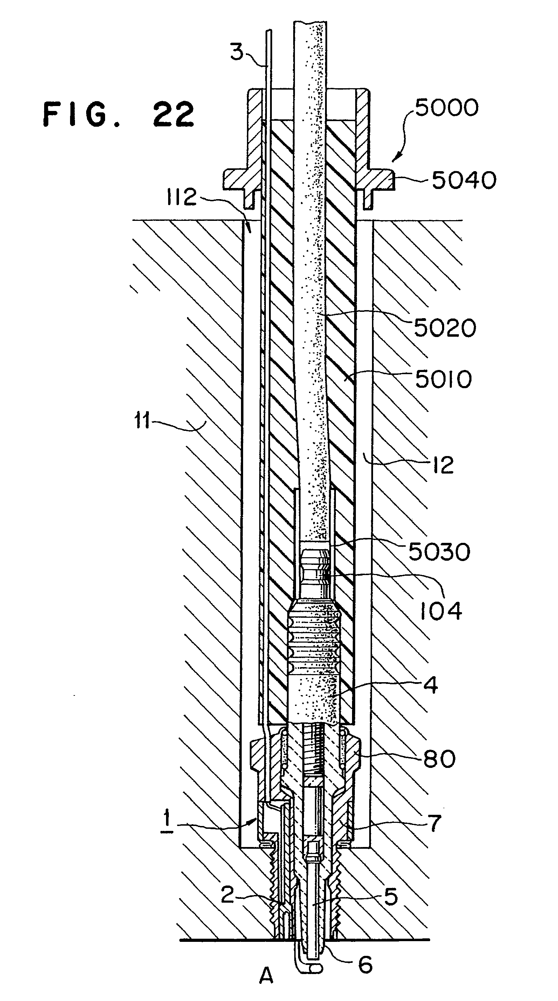

Finally, as shown in Fig. 21, a housing 7 is produced by machining the assembly shown in Fig. 20. According to this method, it is possible to produce the housing 7 according to the fifth embodiment with ease without machining the oblong or elliptical hole.

Fig. 22 is a cross-sectional view showing a structure for mounting the pressure detector built-in type spark plug 1 according to a seventh embodiment.

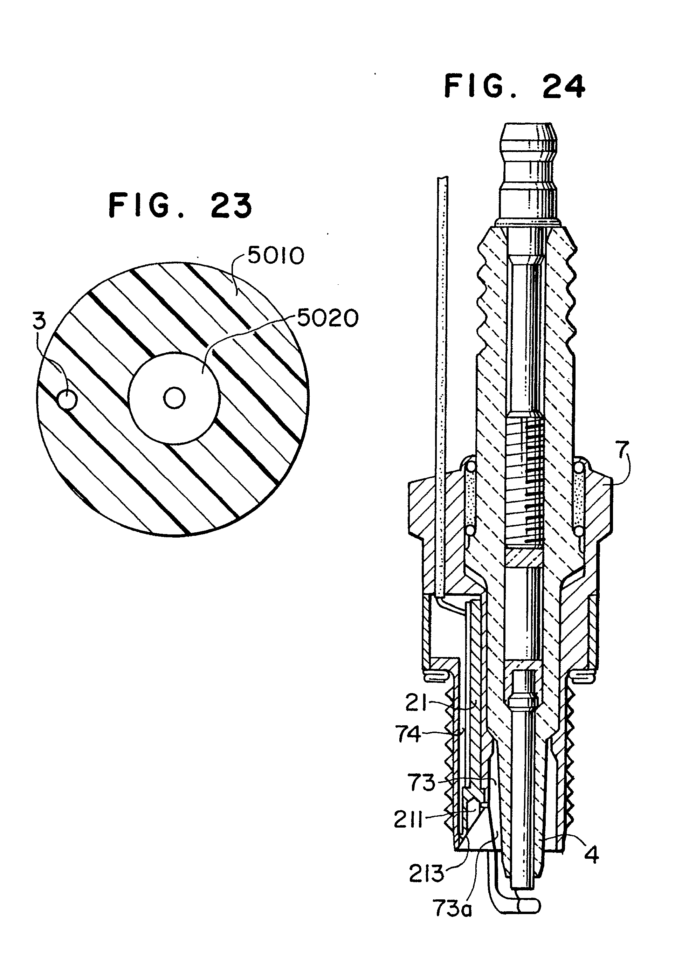

Fig. 23 is a sectional view showing the plug cap 5000 according to the seventh embodiment.

The spark plug 1 has the same structure as in the first embodiment. Reference character A denotes a combustion chamber and numeral 11 denotes a wall surface of the internal combustion engine. Numeral 5000 denotes the plug cap according to the seventh embodiment. The plug cap 5000 is composed of a plug cap body 5010 made of hard material such as synthetic resin. The plug cap 5000 is inserted from a side of a terminal 104 of the insulator 4. A high voltage cable 5020 into which a metallic wire, a resistor wire and a winding resistor are sealingly inserted is inserted into the plug cap body 5010. A sleeve terminal 5030 which engages with the above-described terminal 104 is mounted on an end of the high voltage cable 5020.

A terminal (not shown) is mounted on the other end of the high voltage cable 5020 for connection with a distributor or coil (not shown). Also, a lead wire 3 for transmitting the output signal from one end thereof connected with the sensing element 2 to the other end thereof connected with a controller (not shown) is embedded in an outer peripheral portion of the tubular plug cap body 5010.

The outer dimension of the plug cap body 5010 is less than the hexagonal dimension of the housing 7. In the case where under the condition that the cap 5000 is mounted on the plug, the plug according to the invention is mounted on the engine, the cap body 5010 can be inerted into the plug wrench and the hexagonal portion 80 of the housing 7 can be fitted in and engaged with the plug wrench. By using the plug wrench (not shown), the spark plug 1 having the plug cap 5000 is mounted in the plug hole 12 of the wall 11 of the internal combustion engine as shown in Fig. 22. Thereafter, the atmospheric side opening portion 112 of the plug hole 12 is sealed by the plug hole cover 5040 in order to effect the air-tight condition to prevent dusts or water from entering into the plug hole 12.

In the seventh embodiment, the plug cap body 5010 is projected from the plug hole 12. However, it is possible to locate the body below the upper end face of the plug hole 12. Namely, it is sufficient that the body may be fixed in place by the plug hole cover 5040.

Several methods of assembling the high voltage cable 5020 and the lead wire 3 into the plug cap body 5010 according to the seventh embodiment will be described.

In the first method, a tubular plug cap body 5010 having holes into which the high voltage cable 5020 with a terminal 5030 and the lead line 3 are inserted is prepared, and the high voltage cable 5020 having the terminal 5030 and the lead line 3 are inserted and embedded into the respective holes.

In the second method, when the tubular plug cap body 5010 is formed, the high voltage cable 5020 having the terminal 5030 is embedded in a predetermined position of the cap body 5010 in advance. After forming a unit of the tubular plug cap body 5010 with the high voltage cable 5020 having the terminal 5030, the lead line 3 is embedded and inserted into the plug cap body.

In the third method, the high voltage cable 5020 having the terminal 5030 is attached to the terminal 104 in advance. Namely, the unit, shown in Fig. 22, without the tubular plug cap body 5010 is prepared at first. A mold or die for molding the plug cap body 5010 is arranged around the unit and is filled with the synthetic resin to form the plug cap body 5010. In this case, the high voltage cable 5020 having the terminal 5030 and the lead wire 3 are embedded in the synthetic resin.

According to the seventh embodiment, it is possible to obtain the following advantages.

Namely, in the spark plug, since the lead wire for taking out the output signal of the detector or sensor is mounted on the spark plug due to its structure, when the spark plug is mounted on the engine, the lead wire for taking out the output signal of the detector obstructs the mounting work so that the wire is entangled and in the worst case, the wire may be broken down. It is thus very difficult to mount the plug in place. Furthermore, the specific wrench is needed for the spark plug mounting.

Therefore, Japanese Patent Unexamined Publication No. 64-54686 proposes a means in which the lead line for taking out the output signal of the detector or sensor is dispensed with, the signal output terminal for the detector is formed on the spark plug, and after the spark plug is mounted on the engine, when the plug cap is mounted on the spark plug, the output terminal is connected with a terminal formed in the plug cap to thereby take out the output signal.

However, in the spark plug, the high voltage in the form of a pulse is applied to the spark plug portion, and an electric signal is induced due to the high voltage pulse in the lead wire for the output signal from the detector to cause a malfunction. Therefore, the lead wire for the output signal from the detector must be shielded from the high voltage applied to the spark plug. Turning to the system shown in Japanese Patent Unexamined Publication No. 64-54686, it is very difficult to electrically shield the electrical connection part of the terminal in the plug cap with the terminal in the spark plug from the high voltage applied to the spark plug. As a result, the electrical noise is induced at the electrical connection part due to the high voltage to thereby cause the malfunction.

In contrast, according to the seventh embodiment, it is possible to easily mount the plug onto the engine without obstruction by the lead wire. It is possible to avoid the difficulties such as entanglement and breakdown. Furthermore, since it is possible to take out the lead wire from the sensing element through the plug hole without the additional connection portion, it is possible to prevent the malfunction due to the electrical noise induced by the high voltage. It is thus possible to provide a highly reliable plug system.

The element holder 11 in the foregoing embodiments may be modified in shape as follows.

Namely, as shown in Fig. 24, it is possible to make the second hole 74, into which the element holder 21 is inserted, a slant or inclined structure relative to the end portion 71 of the housing 7 and to detect the combustion pressure through a pocket portion 73a of the housing 7 formed in the first hole 73 for holding the insulator 4.

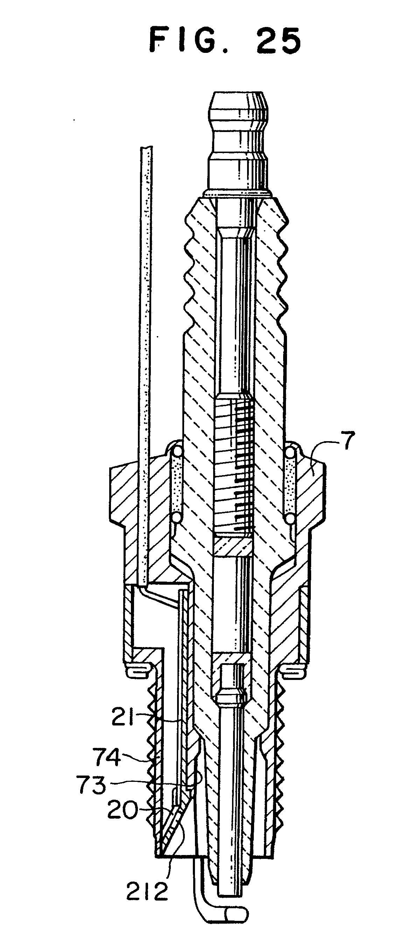

As shown in Fig. 25, a surface of the element holder 21 to which the sensing chip 20 is a bonded may be arranged in a slant or inclined manner relative to the axial direction of the plug and the combustion pressure may be detected through the pocket portion 73a of the housing 7 directly by the penetrating hole 212.

Thus, the combustion chamber side end face of the first hole 74 is formed in a slant manner or the sensing chip 20 is arranged in a slant manner, whereby it is possible to shorten the pressure introduction port 211 and it is possible to enlarge the opening portion of the pressure introduction port 211. As a result, it is possible to exactly detect the pressure with the strain gauges and to detect the pressure in a preferred manner without any residual material of the combustion.

Furthermore, as the shape of the element holder 21, it is possible to form the penetrating hole 212 in the pocket portion 73a of the housing 7 in order to dispense with the pressure introduction port 211 of the element holder 21.

Also, in order to dispense with the pressure introduction port 211 of the element holder 21, a part may be removed over the entire circumferential surface of the screws of the housing 7, and the penetrating hole 212 of the element holder 121 may be formed in the screw-removed portion of the housing 7.

On the other hand, in order to dispense with the pressure introduction port 211 of the element holder 21, a part of the screws of the housing 7 may be removed in the axial direction, so that the penetrating hole 212 of the element holder 21 may be formed in the screw removed portion of the housing 7.

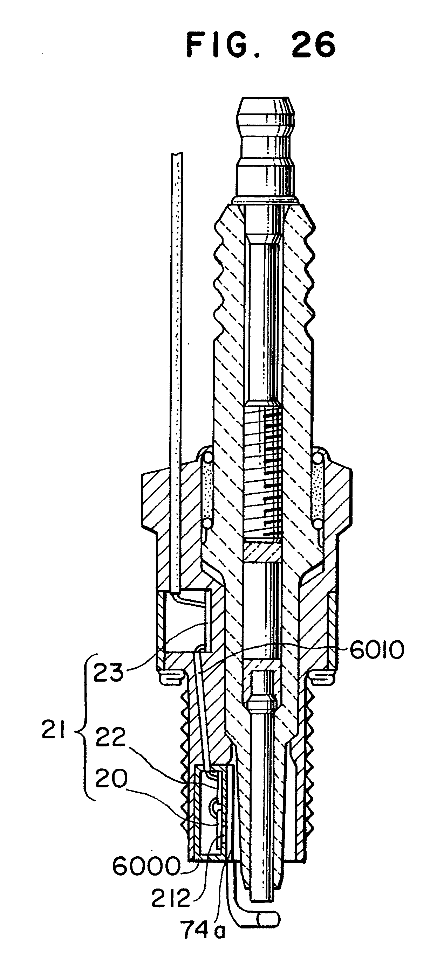

As shown in Fig. 26, in order to dispense with the pressure introduction port of the element holder 21, the element holder 21 is divided into a part of the lead wire 22 and the part of the circuit chip 23 to seal the sensing chip 20 and the lead board 22 in a container 6000 forming the element holder 21. The through hole 212 is formed in the pocket portion 74a of the housing 7. The lead board 22 is connected to the container through lead wires 6010.

The penetrating hole 212 shown in Fig. 26 may not be always formed in the pocket portion 74a. A part of the screw of the housing 7 may be removed. Then, the penetrating hole 212 of the element holder 21 may be formed in the portion of the housing 7 from which the screw has been removed. Then, the lead wires may be used to connect to the lead board.

Also, in the same manner, the screw of the housing 7 may be partially removed in the axial direction. The penetrating hole of the element holder 21 may be formed in the part of the housing 7. The lead wire may be used to connect to the lead board 22.

Furthermore, the sensing chip 20 is arranged perpendicular to the axial direction, and the penetrating hole 212 may be formed on the end face side of the housing 7.

The pressure detector built-in type spark plug according to the seventh embodiment may be mounted in the plug hole of the internal combustion engine according to the following modification of the seventh embodiment.

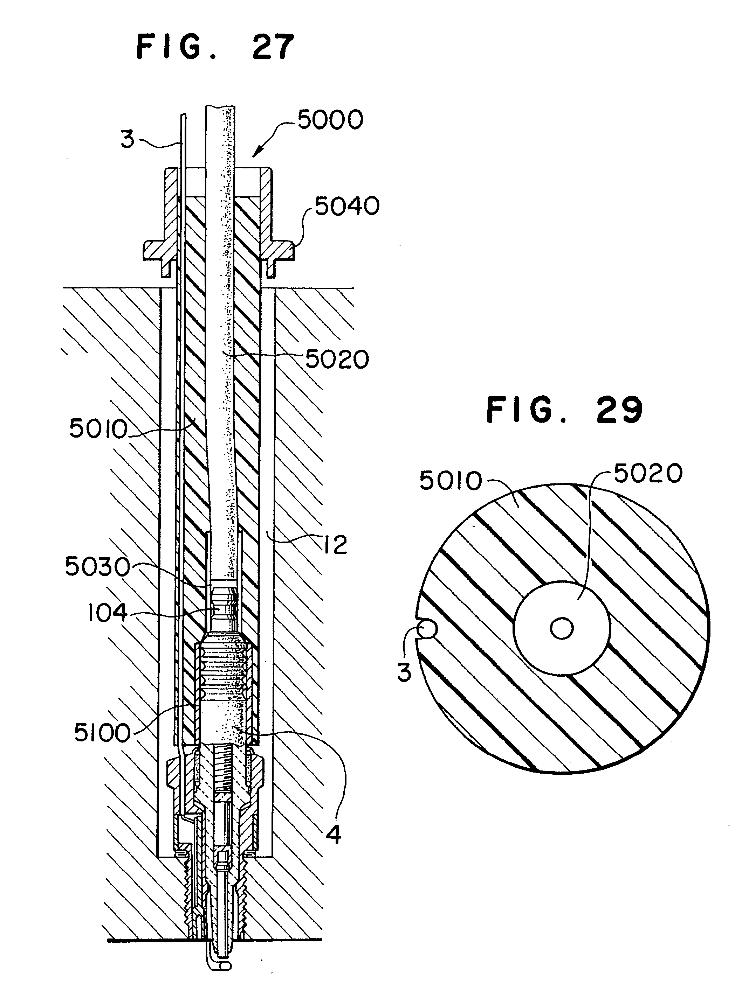

Fig. 27 shows one example. As shown in Fig. 27, in order to enhance the contactability between the insulator 4 and the plug cap body 5010, a compression fitting cap 5100 formed of soft synthetic resin such as silicone rubber may be provided. With such an arrangement, it is possible to suppress the possibility of the spark through the surface of the insulator 4 from the terminal 104 or the sleeve terminal 5030 without fail.

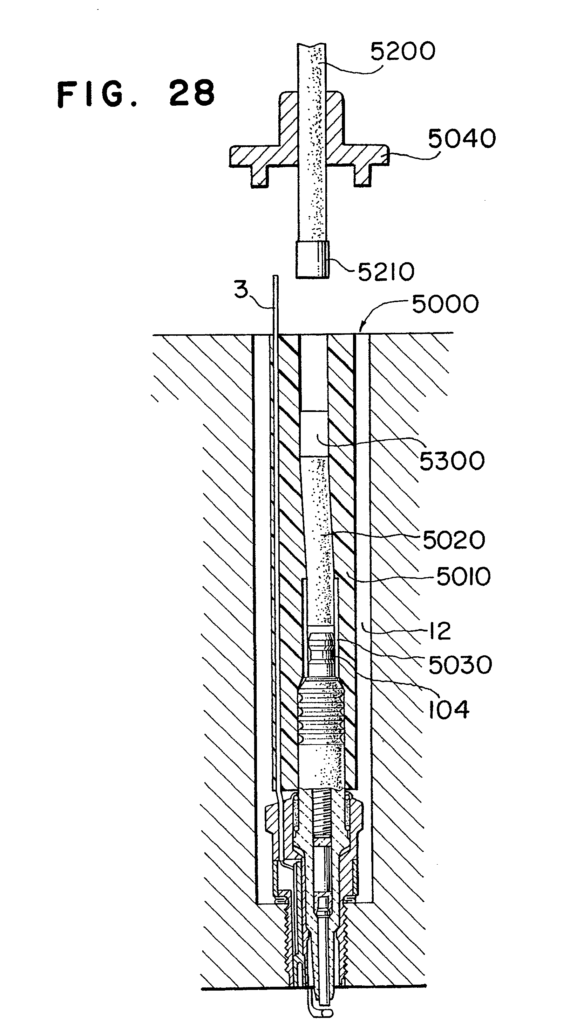

Fig. 28 shows an example in which a connection terminal 5300 connected to a connection terminal 5210 of the high voltage cable 5200 from the distributor or coil is provided in the plug cap body 5010, and the high voltage cable 5020 is connected between the connection terminal 5300 and the terminal 104. The high voltage cable 5020 is not projected from the end face of the plug cap body 5010 to thereby further facilitate the mounting work.

In the structure shown in Fig. 28, the high voltage cable from the distributor or the coil may be applied to the plug according to the invention. However, in a type, without a high voltage cable, in which the coil is directly mounted on the spark plug and which has been recently on the market, it is possible to directly mount the ignition coil onto the plug cap according to the invention.

In the embodiment shown in Fig. 28, it is possible to apply the cap 5100 shown in Fig. 27.

Also with respect to the method of embedding the lead wire 3 in the plug cap body 5010, the embedding grooves in the plug cap body 5010 may be formed as shown in Fig. 29.

It is apparent that the present invention is not limited only to the shown pressure built-in type spark plug but may be applicable to any type of the spark plug with the pressure detector or sensor.

It is thus possible to provide a pressure detector built-in type spark plug which is capable of exactly detecting the pressure.

A spark plug has a pressure detector which includes a diaphragm and semiconductor strain gauges. The diaphragm is provided in the vicinity of the combustion chamber within the housing and extending substantially in the axial direction of the housing to thereby form a reference chamber separated away from the combustion chamber and to thereby generate a strain due to a differential pressure between a pressure within the combustion chamber and a pressure within the reference chamber. The semiconductor strain gauges are formed in the diaphragm for changing its electrical signal in accordance with the strain of the diaphragm.

## Claims

1. An spark plug with a pressure detector, comprising:
   a tubular housing mounted on a wall of a combustion chamber of an internal combustion engine with one end forming a combustion chamber side end face;
   an insulator formed in the housing and extending in an axial direction of the housing with its one end being exposed in the combustion chamber;
   a center electrode fixed in the insulator and exposed at one end in the combustion chamber;
   a ground electrode conductively fixed to the combustion chamber side end face of said housing and confronted with said center electrode to thereby form an electric discharge portion;
   a diaphragm provided in the vicinity of the combustion chamber within the housing and extending substantially in the axial direction of the housing to thereby form a reference chamber separated away from the combustion chamber and to thereby generate a strain due to a differential pressure between a pressure in the combustion chamber and a pressure in said reference chamber;
   a sensing means formed in the diaphargm for changing its electrical signal in accordance with the strain of the diaphragm; and
   a lead electrically connected to the sensing means and extending from the other side end of the housing.

2. The spark plug according to claim 1, wherein the diaphragm is made of sapphire.

3. The spark plug according to claim 1, wherein a distance between the combustion chamber and the reference chamber is less than 10 mm or less from the combustion chamber side end face of the housing.

4. The spark plug according to claim 1, further comprising a holder section for providing the diaphragm so as to close the reference chamber side of a hole which communicates the combustion chamber and the reference chamber with each other, and a substrate in which a pressure introduction port for introducing a pressure of the combustion chamber to the combustion chamber side of the communication hole.

5. The spark plug according to claim 4, wherein the combustion chamber side end face of the pressure introduction port is formed in a slant manner relative to the axial direction of the housing.

6. The spark plug according to claim 5, wherein a cross section of the pressure introduction port for a sensing element is substantially in the form of an oblong shape.

7. The spark plug according to claim 1, wherein the sensing means comprises a semiconductor strain gauge.

8. The spark plug according to claim 1, wherein a line electrically connected to the sensing means for outputting to the outside through a circuit chip for adjusting a signal outputted from the sensor means is provided within the reference chamber of the housing.

9. The spark plug according to claim 6, wherein the circuit chip is located at least above a central portion of the reference chamber.

10. The spark plug according to claim 8, wherein the circuit chip includes at least one of output adjustment means, temperature compensation means and inequilibrium adjustment means.

11. The spark plug according to claim 1, wherein the lead line electrically connected to the sensor means is fixed by sealing material within the reference chamber.

12. An spark plug with a pressure detector, comprising:
a tubular housing mounted on a wall of a combustion chamber of an internal combustion engine with one end forming a combustion chamber end face;
an insulator formed in the housing and extending in an axial direction of the housing with its one end being exposed in the combustion chamber;
a center electrode fixed in the insulator and exposed at one end in the combustion chamber;
a ground electrode conductively fixed to the combustion chamber side end face of the housing and confronted with the center electrode to thereby form an electrically discharge portion;
a terminal electrically connected to the center electrode and projecting toward the other end of said insulator;
a high voltage cable electrically connected to the terminal;
a sensing element provided within the housing, having a strain gauge means for electrically detecting a pressure on the combustion chamber side, and extending in the axial direction of the housing;
a lead electrically connected to the sensing element and extending from the other end side of the housing; and
a plug cap incorporating the high voltage cable and the lead.

EP 0 441 157 A2

FIG. IA

FIG. IB

13

# F I G. 2A

# F I G. 2C

# F I G. 3

FIG. 2B

# F I G. 4

# F I G. 5

# FIG. 6

22

24

20

212

211

L

# FIG. 7

22

24

20

213

211

# FIG. 8A

# FIG. 8B

EP 0 441 157 A2

# F I G. 9A

240

# F I G. 9B

242

241

243

# FIG. 10A

# FIG. 10B

# FIG. IIA

1002

1212  1020  1221  1023  1022  1025

71  72  1024  1224a  1224b  64

1213  1211  1021  1221  7

EP 0 441 157 A2

# FIG. IIC

1020

1204  1201  1203  1202

1203a

1100

1214  1301

1302  1030

1303

# F I G. IIB

EP 0 441 157 A2

# F I G. 12

EP 0 441 157 A2

FIG. 13

EP 0 441 157 A2

# F I G. 14

2020

2214

2021

# F I G. 15

4000

4073

4074

4006

# F I G. 16

B

A

4073

4074

# F I G. 17

B

A

4173

4174

# FIG. 18

3000

74

# FIG. 19

3100

3110

# FIG. 20

3100

3000

# FIG. 21

73

72

74

FIG. 22

# FIG. 23

# FIG. 24

# FIG. 25

7

21

74

73

20

212

# FIG. 26

6010

23

21 { 22

20

6000

212

74a

# FIG. 27

3

5000

5040

5020

5010

12

5030

104

5100

4

# FIG. 29

5010

5020

3

FIG. 28

5200

5040

5210

3

5000

5300

5020

5010

12

5030

104